# EUROPEAN PATENT SPECIFICATION

(11) **EP 1 615 390 B1**
(45) Date of publication and mention of the grant of the patent: **29.10.2008**
(21) Application number: 04016208.3
(22) Date of filing: 09.07.2004
(51) Int. Cl.: H04L 12/46

(54) **Mapping of network configuration data to network interfaces**
Konvertierung von Netzwerkkonfigurationsdaten zu Netzwerkschnittstellen
Conversion des informations de configuration de réseau aux interfaces de réseau

(43) Date of publication of application: 11.01.2006
(73) Proprietor: SAP AG, 69190 Walldorf (DE)
(72) Inventor: Schiebli, Daniel, 76137 Karlsruhe (DE)
(74) Representative: Cohausz & Florack

(56) References cited:
- US-A- 6 061 334
- US-A1- 2002 144 156
- US-A1- 2004 128 201

## Description

### FIELD OF THE INVENTION

The present invention relates in general to a method for providing a network interface within a computer with logical network configuration data, wherein the computer is connected via the network interface to at least one physical network.

The invention relates further in general to a computer arranged for providing a network interface with logical network configuration data.

In addition, the invention relates in general to a computer program product and a computer program for providing a network interface within a computer with logical network configuration data.

### BACKGROUND

In distributed computer environments, such as local area networks (LAN), computers are connected with each other over physical networks. A physical network may, for instance, be a collection of cables and network switches, which allow connecting the computers of the network. The physical network may be understood, for example, as the lowest communication layer of a network. It may, insofar, be understood as the physical representation of the devices connecting the different computers with each other. For connecting the computers to the physical network, network interface cards (NIC) may be installed within the computers. These network interface cards allow connecting the computers to the network, for instance, through switches. The NICs together with the further network infrastructure allow communication between computers. The connection to switches, or routers may be hardwired or via the air interface. Different protocols, such as Ethernet, W-LAN, 802.11, and other communication protocols are possible.

To allow proper communication over a physical network, the network interface cards need to be installed properly. For instance, the cards need to be physically plugged in and an operating system driver needs to be installed and configured properly. The operating parameters of the network interface cards may, for instance, be stored within network configuration data. A network configuration may be a single set of data, which may be required to allow communicating over a network with other computers. For instance, information about the internet protocol (IP) address, a netmask, a broadcast address, and a default gateway may be necessary, in case the communication protocol is TCP/IP. However, other network protocols are also possible, each network protocol requiring particular network configuration data for the network interface cards to be set up with the appropriate parameters.

To allow running certain protocols on network interface cards, operating systems within the computers provide binding of protocols to network interface cards. Insofar, for running a certain protocol, the respective network configuration data is bound to the network interface. The network interface may then provide communication with the corresponding protocol over the network.

In known systems, network interface cards may be accessed by the operating system through a service access point. The logical representation of a network interface within the operating system may be done by logical symbols, for example identifying service access points. Current systems allow static mapping of network configuration data onto respective service access points. The respective network configuration for a service access point needs to be selected manually by a user. Insofar, the network configuration of a network interface card within a computer in current systems is fixed to one protocol. In other words, network configuration data is mapped to a service access point of a network interface card, permanently. Changing the mapping of network configuration to a different service access point or changing the mapping of a service access point to a particular protocol needs to be done manually. Configuration parameters need to be adapted to the new protocol and the binding of protocol to network interface card needs to be done manually.

This causes the drawback that after disconnecting a network interface card from a network physically, and connecting a different network to the network interface card, changes to the network configuration may not be carried out automatically. A user has to manually select, which network configuration to use. Adaptation to the new network needs manual interaction.

These problems become even more severe in case more than one physical network is connected to different network interface cards within one computer. In such a case, it might happen that the different connection cables may be confused after disconnecting and during reconnecting. As a result, none of the network cards work properly, as none is configured correctly. Another problem may occur, in case different logical networks are operated within one physical network. A logical network may be formed by a group of a computers communicating with each other For instance, a TCP/IP subnet may provide a logical network within a physical network.

The computers of a logical network may share a common feature. This may, for instance, be a common subnet configuration. Within one certain IP-address range, certain services may be operated. These services may, for instance, be a storage network, a server network, or a client network.

Insofar, a logical network may be a storage network, a server network, a client network, or any other network. Each of these logical networks may run on the same physical network, however share different configuration features, such as, for instance, subnet configurations or other network configuration parameters. To configure one certain computer for one of these logical networks, the respective network configuration has to be chosen. The role of a computer, i.e. which logical network it is operated in, may change during operation. In such a case, the computer needs to be reconfigured. Reconfiguring the computer manually may be error prone.

Document US 6,061,334 discloses an apparatus for managing a switched routed network including a network configuration learning unit operative to learn a configuration of the switched routed network, a VLAN assignment unit for generating a division of the network into virtual LANs (VLANs) based on the learned configuration of the network; and a change manager operative to detect a change in the configuration of the network and to modify the division of the network into VLANs. A method for generating a division of a switched routed network into virtual LANs based on a learned configuration of the network is also disclosed.

### SUMMARY

To overcome the above-mentioned technical problems, the invention proposes a method for providing a network interface within a computer with logical network configuration data, wherein the computer is connected via the network interface to at least one physical network, with receiving within the network interface from the physical network logical network identification information, and mapping network configuration data onto the network interface corresponding to the received logical network identification, to enable the network interface to provide communication between the computer and the corresponding logical network

According to these embodiments, network configuration data may be mapped onto the network interface, i.e. the network interface card, or its logical representation, i.e. its service access point, depending on the logical network the interface should be run in. Depending on logical network identifiers received within the network interfaces, respective configuration data may be mapped onto this network interface or its logical representation.

According to embodiments, the invention provides de-coupling the network configuration from the actual network interface. The network interface may be a network interface card. No static mapping between a logical representation of the network interface, for example a service access point of a network interface, and a network configuration data set is provided. Instead, embodiments provide mapping configuration data for different logical networks to network interfaces automatically, depending on the network identification received over the respective network interface

A user may define which logical network the computer is allowed to be operated in. A mapping between the network configuration data and the respective logical network may, in such a case, be carried out automatically through a mapping unit. This mapping however, depends on the network identifier received over the respective network interface. The mapping unit maps the logical network configuration data onto the network interface or its service access point corresponding to the received network identification.

There is no need to define, which network interface to operate within which logical network. To account for correct configuration, each logical network may transmit a logical network identification information over the physical network. A network interface card coupled to a particular physical network may receive via this connection the logical network identification information. After having received the respective logical network identification information, the receiving network interface card may be configured to be operated within this logical network. This configuration may be done by mapping the corresponding network configuration data to the network interface or its corresponding service access point of this network interface card. Configuration of network interfaces may thus be carried out automatically.

It is only required to receive via the physical network logical network identification information, to allow the appropriate mapping of logical network configuration data to the respective network interface.

Assigning network configuration and wiring the cables of the physical networks to the respective network interfaces may be carried out separately from each other. Plugging the correct cable into the correct network interface card is not necessary anymore. Mixing up cables may be accounted for by configuring the network interface through its service access points with the appropriate logical network configuration upon reception of logical network identification information, automatically. Changing physical cable connections may thus be tolerated.

Different operating systems may detect devices, for instance network interface cards, during booting in different orders. Detecting the installed network interface cards in different orders may not disturb network configuration according to embodiments. The network configuration may be independent of the respective service access point. Any mapping between service access point and network configuration data may be possible. The network interface needs only to receive logical network identification information to allow automatic mapping between configuration data and network interface.

Further, logical networks may be moved from one physical network to another. The respective connected network interfaces may be configured to the appropriate logical network during operation, by using the logical network identification information enabling mapping of logical network configuration to network interfaces. For instance, it may be possible to introduce a further physical network and run a particular logical network on this physical network rather then running two different logical networks over one single physical network. This may be appropriate in case traffic on the physical network increases and proper operation is disturbed. The only requirement may be that the user determines which logical networks the computer is allowed to be operated in.

In addition, it may be possible to run one single logical network on multiple physical network interfaces. This may provide high availability of the logical network. Embodiments provide sending one same logical network identification information on each physical network, allowing mapping each of the network interfaces connected to the different physical networks to the network configuration data of the same logical network.

According to embodiments, routing the received logical network identification to a mapping unit located with the computer for mapping the network configuration data onto the network interface or its respective service access point, corresponding to the received logical network identification is provided. The mapping unit may allow mapping of logical network configuration data onto the network interface. This may, for instance, be done by mapping the logical network configuration data onto the service access point of the network interface. The mapping unit may thus provide automatic and dynamic configuration of network interfaces.

Providing at least two logical network configuration data sets, wherein each logical network configuration data set enables the network interface to provide communication between the computer and the corresponding logical network may also be possible. According to these embodiments, different logical networks may be run on one physical network. Moreover, more than one network interface may be configured with a respective logical network configuration.

To allow quick access to logical network configuration, embodiments provide storing the network configuration data within the computer and accessing the required network configuration data when mapping the network configuration data onto the network interface. According to these embodiments, mapping may be carried out quickly. The network configuration may be done by an administrator and stored within the respective computers. Configuring the network interfaces may only require loading the network configuration data after reception of logical network identification information. No manual interaction is necessary.

It may also be possible, according to embodiments, to request network configuration data from a server located within the physical and/or the logical network after having received the logical network identification. In such a case, the network may operate a server, which may be a domain name server (DNS) or a dynamic host configuration protocol (DHCP) server. After having received the network identification, the respective network interface may broadcast a DHCP request within the connected logical network. A DHCP server within this logical network may provide the network interface with network configuration data in a DHCP response. This network configuration data may be stored within the computer and used for configuring the network interface.

Running more than one logical network on a single physical network may be provided, according to embodiments, by providing at least two network interface identifications for one network interface and mapping the network configuration data onto the network interface with the corresponding identification after having received the logical network identification, respectively. For instance, a computer may be identified by a particular network identification. A service running on this computer may be identified by another particular network identification. These different network identifications may be utilised for network interface identification. This, for instance, may be done by using two different IP-addresses for the computer and the service running on the computer. Using these two different identifications, e.g. IP-addresses, one single network interface may be used for working on different logical networks. For each of the identifications, a mapping to the respective network configuration data for configuring the network interface may be carried out. For example, each identification may be represented by a respective service access point, which may be configured using the described mapping.

A so-called promisc mode may be used within the network interfaces for the initialisation of the logical network and for mapping the network interface onto the logical network configuration data for the respective logical network. In the so called promisc mode, embodiments provide operating the network interface such that it may receive every message within the network and that it may route every message to the operating system of the computer.

The operating system may decide, whether the received message is a logical network identification information. It may then initiate mapping of configuration data to network interface. After having configured the network interface accordingly, the promisc mode may be turned off, to reduce traffic on the operating system.

In normal mode, only messages intended for the respective computer or service are routed through the network interface to the operating system. Messages not intended for the computer or service, for instance intended for a different logical network, may already be blocked or filtered within the network interface. However, broadcast messages may be used for transporting logical network identification information. These broadcast messages may be routed at any time from the network interface to the operating system. Using the broadcast messages may allow switching mapping of a network interface from one particular logical network configuration to one different logical network configuration.

Some network interfaces may be in a listen mode. These network interfaces receive every message on the network and also process every message. Insofar, network interfaces in the listen mode analyse each data token on the network. Network interfaces in a listen mode may be these interfaces, which are not configured properly, yet. To only access the network interfaces, which have not been configured yet, and thus are in listen mode, embodiments provide transmitting faulty broadcasts. Faulty broadcasts may be messages, which are only processed by those network interfaces, which are in listen mode. Network interfaces which are running in normal mode may overhear these messages. Faulty messages may reduce message overhead on already configured network interfaces, as they are only processed by network interfaces in listen mode.

To allow identifying a logical network and broadcasting the logical network identification throughout a physical network, embodiments provide running a unit within the physical network, which transmits the logical network identification into the network. This unit may, for example, be a tagging unit. This unit may send a logical network identification information message for each logical network, in intervals, for example every second, every ten seconds, every minute or any other interval. Using these messages, the unit identifies the logical network running within the physical network. A computer connected to the physical network though a network interface may receive this logical network identification information message and may identify, which logical networks are running on top of the respective physical networks. The netwok interfaces of the computer may then be configured accordingly.

Another aspect of the invention is a computer arranged for providing a network interface with logical network configuration data, in particular according to a method described above, comprising at least one network interface card, interfacing the computer with at least one physical network, a storage arranged for storing at least one logical network configuration data set, and a mapping unit for mapping a network configuration data onto the network interface card, wherein the mapping unit is arranged for mapping network configuration data onto the network interface card after reception of a corresponding logical network identification, to enable the network interface card to provide communication between the computer and the corresponding logical network.

A further aspect of the invention is a computer program for providing network interfaces within a computer with logical network configuration data, the program comprising instructions operable to cause the computer to receive within the network interface from a physical network logical network identification information, and map network configuration data onto the network interface corresponding to the received logical network identification, to enable the network interface to provide communication between the computer and the corresponding logical network.

Yet, another aspect of the invention is a computer program product for providing network interfaces within a computer with logical network configuration data, the product comprising a computer program stored thereon, the program comprising instructions operable to cause the computer to receive within the network interface from a physical network logical network identification information, and map network configuration data onto the network interface corresponding to the received logical network identification, to enable the network interface to provide communication between the computer and the corresponding logical network.

All features of the dependent claims may be implemented as embodiments of independent claims within different categories. In particular the features according to the method may be incorporated structurally within the apparatus by appropriate means arranged for implementing the respective method steps.

Referring now to the drawings, in which like numerals represent like elements throughout the several figures, aspects of the present invention and the exemplary operating environment will be described.

### BRIEF DESCRIPTION OF THE DRAWINGS

- Fig. 1: shows a computer system for implementing the inventive method;
- Fig. 2: shows a further computer system for implementing the inventive method;
- Fig. 3: shows another computer system for implementing the inventive method;
- Fig. 4: illustrates layers of a reference model for implementing the invention;
- Fig. 5: shows a flowchart of an inventive method.

### DETAILED DESCRIPTION

In FIGS: 1 to 5 reference numbers 100/200, 110/210 .. denote similar elements, where appropriate, the function of these elements can be different.

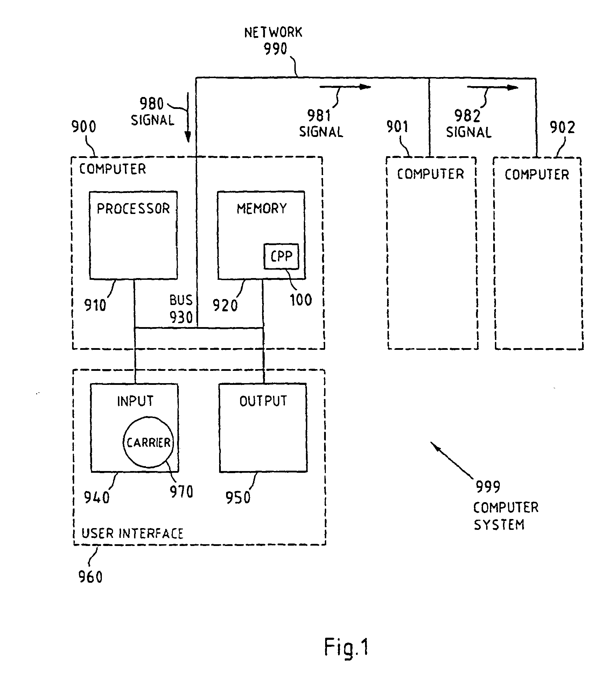

FIG. 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980. In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like. Processor 910 is, for example, a central processing unit (CPU), a micro-controller unit (MCU), digital signal processor (DSP), or the like.

Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web WWW). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

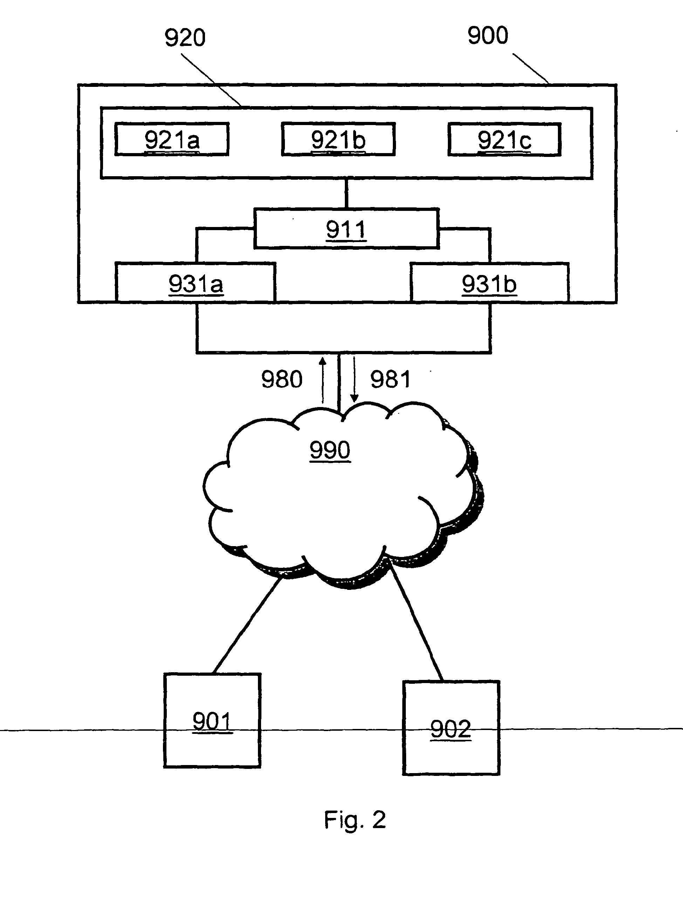

Figure 2 shows a computer system arranged for implementing the inventive method. Shown are computer 900 comprising memory 920, mapping unit 911, and network interface cards 931a, b. Memory 920 may store different logical network configuration data sets 921a, b, c. Memory 920 is connected to mapping unit 911. Mapping unit 911 is connected to network interface cards 931.

The computer 900 is connected via network interface cards 931a, b to physical network 990. Computer 900 may receive messages 980 from network 990 and send messages 981 into network 990. Within network 990, a tagging unit 901 and/or a DHCP server 902 may be located.

Each of the network interface cards 931 may have a separate physical connection to a network 990. After connecting one of the network interface cards 931a, b to network 990, the network interface cards 931 may listen for messages comprising logical network identification information.

Received messages, in particular broadcast messages, may be routed through the network interface card to the operating system (OS) running on the computer 990.The OS may be within CPP 100 (not depicted). The operating system or CPP 100(not depicted) may decide, whether the respective message comprises logical network identification information. In case logical network identification information is detected, the operating system may control mapping unit 911 insofar that a corresponding logical network configuration data 921 is retrieved from memory 920. Thereby, mapping unit 911 may be controlled by CPP 100 to map a corresponding logical network configuration onto the respective network interface card 931. Network interface card 931 may then be operated within the respective logical network with the appropriate network configuration.

To allow transmitting logical network identification information into the network 990, tagging unit 901 may be connected to network 990. Tagging unit 901 may broadcast in intervals, for instance every second, network identification information messages, which may be received by network interface cards 931. Using the network identification information messages, appropriate configuration with logical network configuration data through mapping unit 911 is possible, automatically.

In case, for instance, when network interface card 931b receives, via a message 980, a logical network identification information determining the logical network as server network, network interface card 931b may route this message to the operating system. The operating system may operate mapping unit 911 to retrieve the respective logical network configuration data 921 for a server network.

In case the respective data is not available entirely within memory 920, for instance only an information that configuration data is to be retrieved via a DHCP request is available, network interface card 931b may request, via message 981, DHCP server 902 within a DHCP request message, to provide the respective network configuration data. DHCP server 902 may transmit the corresponding logical network configuration data to network interface card 931b through network 990 within message 980. Network interface card 931b may retrieve the DHCP response message, and provide memory 920 with the logical network configuration data. The stored logical network configuration data may then be mapped onto network interface card 931b to operate network interface card 931b within the respective logical network.

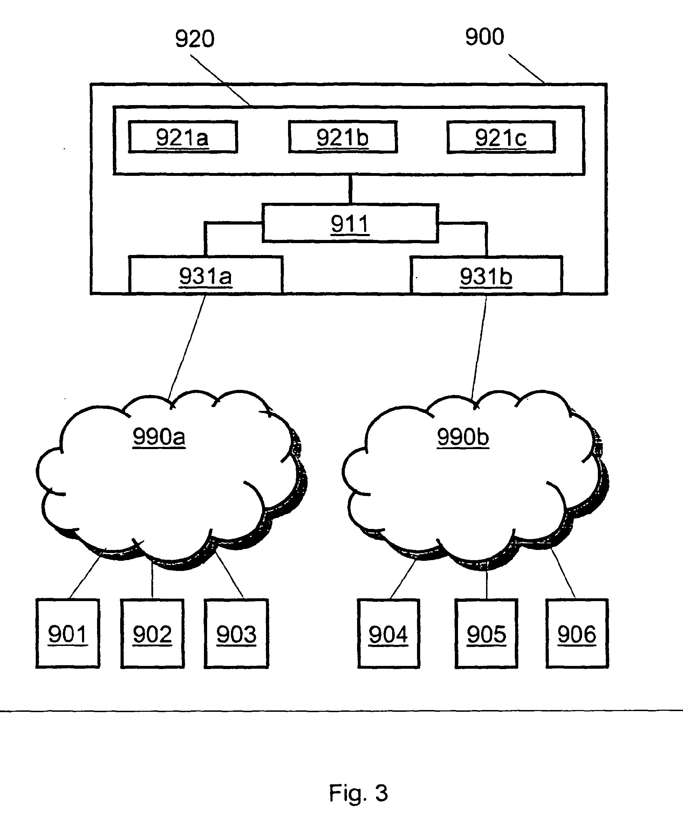

Figure 3 shows a network environment, wherein computer 900 is connected to different physical networks 990a, b. When connecting network interface cards 931a, b to the networks 990a, b, it is not known which logical networks are run on the physical networks 990a, b. To allow configuring the network interface cards 931a, b to the respective logical network, these network interface cards 931a, b may receive messages from the networks 990a, b containing logical network identification information. According to the received logical network identification information, mapping unit 911 may map a corresponding logical network configuration data 921 onto the network interface card 931a, b.

For example, within physical network 990a, a logical network within a particular IP subnet and a network role as storage network may be operated. Physical network 990a may connect computers 901, 902, 903 and 900. These computers 900, 903 may be operated within the same logical network on the same physical network 990a. As the mapping unit 911 provides automatic mapping of network configuration data onto the network interface card 931, it is not required to connect the correct network interface card 931a, or b to the physical network 990a.

After de-coupling the network interface cards 931a, b from the physical networks 990a, b, cables may be mixed up when reconnecting. However, mixing up the cable may not disturb network configuration. Each of the network interface cards 931a, b may receive from the connected physical network 990a, b, respective logical network identification information, allowing mapping unit 911 to map the respective logical network configuration data onto the corresponding network interface card 931a, b. In the current case, network interface card 931a may be configured with logical network configuration data 921a in case a logical network configuration information identifying the particular logical network is received on computer 900.

For instance, physical network 990b may operate two different logical networks. These may be a server network, which is operated between computers 906, 905, and a storage network, which is operated between computers 900, 904. A tagging unit within physical network 990b (not depicted) may transmit logical network identification information determining that on physical network 990b a storage network is running. Computer 990 may receive this message through network interface card 931b. As an administrator may determine that computer 900 is allowed to be operated within a storage network, this message may be used by the operating system to operate mapping unit 911 to map the corresponding logical network configuration data onto network interface card 931b, to allow network interface card 931b to communicate with other computers of the logical storage network.

When receiving logical network identification information concerning a server network, and computer 900 is not allowed to be operated in a server network, the received message may be discarded.

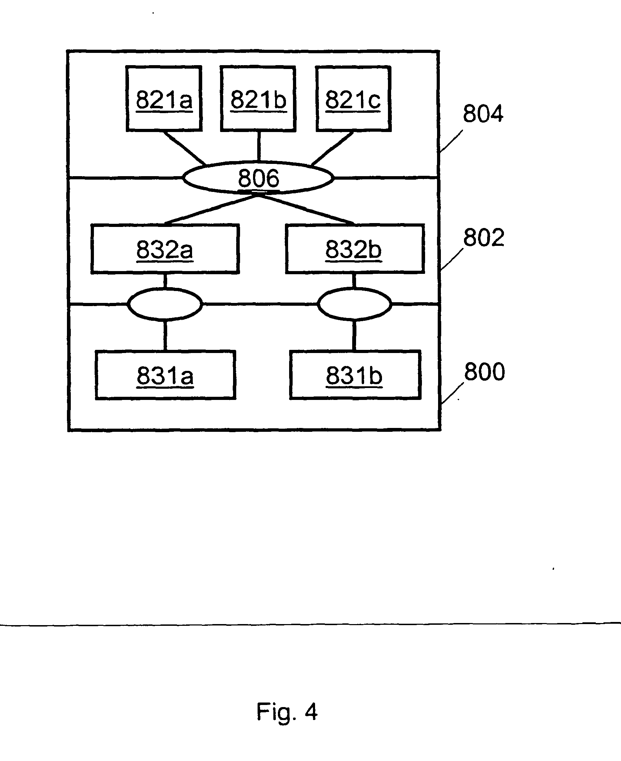

Figure 4 shows a layer model for implementing an inventive method. Shown are physical layer 800, mapping layer 802, and application layer 804. Mapping layer 802 may comprise functionality of the OSI reference layers data link, network, transport and/or session.

Within physical layer 800, representations of network interface cards 831a, b are shown. For accessing network interface cards 831a, b, service access points 832a, b are provided, which allow mapping layer 802 to access the network interface cards 831a, b. Mapping access point 806 allows application layer 804 to access the service access points 832. Through mapping access point 806, different logical network configuration data 821 may be mapped onto the service access points 832 of network interface cards 831.

By mapping the logical network configuration data 821a, b, c onto the service access points 832a, b, of network interface cards 832a, b through mapping access point 806, automatic mapping is possible. Which logical network configuration data to map onto which service access point 832a, b of network interface card 831a, b may be determined from reading broadcast messages from the network, which comprise logical network identification information.

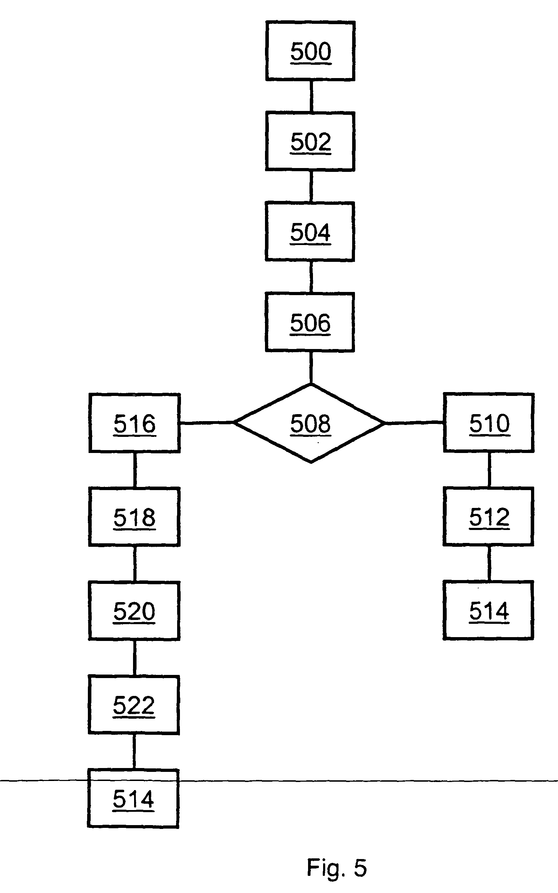

Figure 5 shows a flowchart of an inventive method. After having installed the computer and determined, which logical network the computer should be operated in, the computer may be connected to a physical network. Within the physical network, a logical network identification information message may be broadcast (500). This broadcast message may be received by every computer connected to the physical network (502), which is listening for broadcast messages.

After having received the logical network identification information, this message may be routed to the operating system of the respective computers (504). Within the operating systems, the logical network identification information may be analysed and determined, which logical network is running on the physical network (506). In case the computer is allowed to be operated in the logical network, which logical network identification information has been received, it is checked whether a logical network configuration data is available within a storage (508).

In case the logical network configuration data is available within the computer, this logical network configuration data may be loaded (510). The loaded logical network configuration data may then be mapped onto the service access point of the network interface card (512). The network interface card may use the network configuration data, such as IP-address, subnet mask, DHCP server, DNS, gateway, and other (514).

In case the configuration is not available within the computer (508) it may be stored to use a DHCP service to retrieve the required configuration data. Insofar, a DHCP request may be broadcast into the network requesting network configuration data for the logical network which logical network, identification information has been received (516).

A DHCP server within the logical network may respond with a DHCP response to this request and may provide the respective logical network configuration data, which response may be received within the computer (518). After having received the DHCP response, the logical network configuration data may be extracted and stored within the computer (520). With the stored logical network configuration data, mapping of the data onto the service access point of the network interface card is possible (522), where after the network interface card and the computer may be operated within the respective logical network properly (514).

### REFERENCE NUMBERS

- 100: computer program product
- 900: computer
- 910: processor
- 920: memory
- 930: bus
- 940: input device
- 950: output device
- 960: user interface
- 970: program carrier
- 980: program signal
- 990: computer network
- 999: computer network system

- 901: tagging unit
- 902: DHCP server
- 903-906: computers
- 911: mapping unit
- 921: logical network configuration data
- 931: network interface card
- 800: physical layer
- 802: mapping layer
- 804: application layer
- 806: service access point
- 808: service access point
- 821: physical representation of network interface card
- 822: logical representation of network interface card
- 831: logical network configuration data
- 500: broadcast logical network identification
- 502: receive logical network identification information
- 504: route message to operating system
- 506: determine logical network
- 508: check whether configuration data is available
- 510: load logical network configuration data
- 512: map logical network configuration data onto network interface card
- 514: operate computer within logical network
- 516: DHCP request
- 518: receive DHCP response
- 520: store logical network configuration data
- 522: map logical network configuration data onto network interface card

## Claims

1. Method for providing a network interface (931) within a computer (900) with logical network configuration data, wherein the computer (900) is connected via the network interface (931) to at least one physical network (990), with
- receiving within the network interface (931) from the physical network (990) logical network identification information, and
- mapping network configuration data onto the network interface (931) corresponding to the received logical network identification, to enable the network interface (931) to provide communication between the computer (900) and the corresponding logical network (900, 901, 902), **characterized by** the step of
- requesting network configuration data from a server (902) located within the physical and/or the logical network (990) after having received the logical network identification by broadcasting a DHCP request to the server and receiving the DHCP response from the server.

2. Method of claim 1, with routing the received logical network identification to a mapping unit (911) located within the computer (900) for mapping the network configuration data onto the network interface (931) corresponding to the received logical network identification.

3. Method of claim 1 or 2, with providing at least two logical network configuration data sets, wherein each logical network configuration data enables the network interface (931) to provide communication between the computer (900) and the corresponding logical network (900, 901, 902).

4. Method of any one of claims 1 to 3, with providing at least two network interface identifications for one network interface (931) and mapping the network configuration data onto the network interface (931) with the corresponding identification after having received the logical network identification, respectively.

5. Method of any one of claims 1 to 4, with operating the network interface (931) such that it receives every message within the network (990) and routes every message to the operating system of the computer (900).

6. Method of any one of claims 1 to 5, with running a unit (901) within the physical network (990) which transmits the logical network identification into the network (990).

7. The method of any one of claims 1 to 6, with transmitting the logical network identification into the network (990) in broadcast mode.

8. The method of any one of claims 1 to 7, with transmitting the logical network identification into the network (990) as faulty broadcasts.

9. Computer arranged for providing a network interface (931) with logical network configuration data, in particular according to a method of any one of claims 1 to 11, comprising:
- at least one network interface card (931), interfacing the computer (900) with at least one physical network (990),
- a storage (921) arranged for storing at least one logical network configuration data set, and
- a mapping unit (911) for mapping a network configuration data onto the network interface card (931),
- wherein the mapping unit (911) is arranged for mapping network configuration data onto the network interface card (931) after reception of a corresponding logical network identification, to enable the network interface card (931) to provide communication between the computer (900) and the corresponding logical network (900, 901, 902), and **characterized in that** the network configuration data is requested from a server (902) located within the physical and/or the logical network (990) after having received the logical network identification by broadcasting a DHCP request to the server and receiving the DHCP response from the server.

10. Computer program for providing a network interface (931) within a computer (900) with logical network configuration data, according to a method of any one of claims 1 to 11 or to be run on a computer according to claim 9, the program comprising instructions operable to cause the computer to:
- receive within the network interface (931) from a physical network (990) logical network identification information, and
- map network configuration data onto the network interface (931) corresponding to the received logical network identification, to enable the network interface (931) to provide communication between the computer (900) and the corresponding logical network (900, 901, 902), and
- store the network configuration data within the computer (900) and access the required network configuration data when mapping the network configuration data onto the network interface (931) or
- request network configuration data from a server (902) located within the physical and/or the logical network (990) after having received the logical network identification by broadcasting a DHCP request to the server and receiving the DHCP response from the server.

11. Storage medium carrying a computer program product that when loading in a computer, carries the steps of the method of any one of claims 1 to 8.

## Patentansprüche

1. Verfahren zum Erzeugen einer Netzwerkschnittstelle (931) in einem Computer (900) mit Logiknetzwerk-Konfigurationsdaten, wobei der Computer (900) über die Netzwerkschnittstelle (931) mit wenigstens einem physikalischen Netzwerk (990) verbunden ist, umfassend:
- Empfangen von Logiknetzidentifikationsinformationen in der Netzwerkschnittstelle (931) von dem physikalischen Netzwerk (990), und
- Abbilden von Netzwerkkonfigurationsdaten auf die Netzwerkschnittstelle (931) entsprechend der empfangenen Logiknetzidentifikation, um die Netzwerkschnittstelle (931) zu befähigen, Kommunikationen zwischen dem Computer (900) und dem entsprechenden logischen Netzwerk (900, 901, 902) zu ermöglichen, **gekennzeichnet durch** den Schritt des
- Anforderns von Netzwerkkonfigurationsdaten von einem in dem physikalischen und/oder dem logischen Netzwerk (990) befindlichen Server (902) nach dem Empfang der Logiknetzidentifikation **durch** Rundsenden einer DHCP-Anforderung zum Server und Empfangen der DHCP-Antwort vom Server.

2. Verfahren nach Anspruch 1, mit Weiterleiten der empfangenen Logiknetzidentifikation zu einer im Computer (900) befindlichen Abbildungseinheit (911), um die Netzwerkkonfigurationsdaten auf die Netzwerkschnittstelle (931) entsprechend der empfangenen Logiknetzidentifikation abzubilden.

3. Verfahren nach Anspruch 1 oder 2, mit Bereitstellen von wenigstens zwei Logiknetzkonfigurationsdatensätzen, wobei jeder Logiknetzkonfigurationsdatensatz die Netzwerkschnittstelle (931) befähigt, Kommunikationen zwischen dem Computer (900) und dem entsprechenden logischen Netzwerk (900, 901, 902) zu ermöglichen.

4. Verfahren nach einem der Ansprüche 1 bis 3, mit Bereitstellen von wenigstens zwei Netzwerkschnittstellenidentifikationen für eine Netzwerkschnittstelle (931) und das Abbilden der Netzwerkkonfigurationsdaten auf die Netzwerkschnittstelle (931) mit der entsprechenden Identifikation nach dem Empfang der jeweiligen Logiknetzidentifikation beinhaltet.

5. Verfahren nach einem der Ansprüche 1 bis 4, mit Betreiben der Netzwerkschnittstelle (931) derart, dass sie jede Nachricht innerhalb des Netzwerks (990) empfängt und jede Nachricht zum Betriebssystem des Computers (900) leitet.

6. Verfahren nach einem der Ansprüche 1 bis 5, mit Betreiben einer Einheit (901) innerhalb des physikalischen Netzwerks (990), die die Logiknetzidentifikation in das Netzwerk (990) überträgt.

7. Verfahren nach einem der Ansprüche 1 bis 6, mit Senden der Logiknetzidentifikation zu dem Netzwerk (990) im Rundsende-Modus.

8. Verfahren nach einem der Ansprüche 1 bis 7, mit Senden der Logiknetzidentifikation in das Netzwerk (990) als fehlerhafte Rundsendeeinheiten.

9. Computer zum Bereitstellen einer Netzwerkschnittstelle (931) mit Logiknetzkonfigurationsdaten, insbesondere gemäß einem Verfahren nach einem der Ansprüche 1 bis 11, umfassend:
- wenigstens eine Netzwerkschnittstellenkarte (931), um den Computer (900) mit wenigstens einem physikalischen Netzwerk (990) zu verbinden,
- einen Speicher (921) zum Speichern von wenigstens einem Logiknetzkonfigurationsdatensatz, und
- eine Abbildungseinheit (911) zum Abbilden eines Netzwerkkonfigurationsdatensatzes auf die Netzwerkschnittstellenkarte (931),
- wobei die Abbildungseinheit (911) eingerichtet ist, um nach dem Empfang einer entsprechenden Logiknetzidentifikation Netzwerkkonfigurationsdaten auf die Netzwerkschnittstellenkarte (931) abzubilden, um die Netzwerkschnittstellenkarte (931) zu befähigen, Kommunikationen zwischen dem Computer (900) und dem entsprechenden logischen Netzwerk (900, 901, 902) zu ermöglichen, und **dadurch gekennzeichnet, dass** die Netzwerkkonfigurationsdaten von einem Server (902) in dem physikalischen und/oder dem logischen Netzwerk (990) nach dem Empfang der Logiknetzidentifikation durch Rundsenden einer DHCP-Anforderung zum Server und Empfangen der DHCP-Antwort vom Server angefordert werden.

10. Computerprogramm zum Bereitstellen einer Netzwerkschnittstelle (931) in einem Computer (900) mit Logiknetzkonfigurationsdaten mit einem Verfahren nach einem der Ansprüche 1 bis 11 oder zum Abarbeiten auf einem Computer nach Anspruch 9, wobei das Programm Befehle beinhaltet, die den Computer zu Folgendem veranlassen:
- Empfangen von Logiknetzidentifikationsinformationen in der Netzwerkschnittstelle (931) von einem physikalischen Netzwerk (990), und
- Abbilden von Netzwerkkonfigurationsdaten auf die Netzwerkschnittstelle (931) entsprechend der empfangenen Logiknetzidentifikation, um die Netzwerkschnittstelle (931) zu befähigen, Kommunikationen zwischen dem Computer (900) und dem entsprechenden logischen Netzwerk (900, 901, 902) zu ermöglichen, und
- Speichern der Netzwerkkonfigurationsdaten in dem Computer (900) und Zugreifen auf die benötigten Netzwerkkonfigurationsdaten beim Abbilden der Netzwerkkonfigurationsdaten auf die Netzwerkschnittstelle (931), oder
- Anfordern von Netzwerkkonfigurationsdaten von einem in dem physikalischen und/oder dem logischen Netzwerk (990) befindlichen Server (902) nach dem Empfang der Logiknetzidentifikation durch Rundsenden einer DHCP-Anforderung zum Server und Empfangen der DHCP-Antwort vom Server.

11. Speichermedium zum Führen eines Computerprogrammprodukts, das, wenn es in einen Computer geladen wird, die Schritte des Verfahrens nach einem der Ansprüche 1 bis 8 ausführt.

## Revendications

1. Méthode destinée à fournir à une interface de réseau (931) dans un ordinateur (900) des données de configuration d'un réseau logique, dans laquelle l'ordinateur (900) est connecté via l'interface de réseau (931) à au moins un réseau physique (990), avec
- une réception dans l'interface de réseau (931) en provenance du réseau physique (990) d'une information d'identification du réseau logique, et
- une mise en correspondance de données de configuration du réseau sur l'interface de réseau (931) correspondant à l'identification reçue du réseau logique, en vue de permettre à l'interface de réseau (931) de fournir une communication entre l'ordinateur (900) et le réseau logique correspondant (900, 901, 902),
**caractérisée par** l'étape consistant à
- demander des données de configuration du réseau à partir d'un serveur (902) situé dans le réseau physique et/ou logique (990) après avoir reçu l'identification du réseau logique en diffusant une demande à protocole DHCP vers le serveur et en recevant la réponse DHCP en provenance du serveur.

2. Méthode de la revendication 1, avec un acheminement de l'identification reçue du réseau logique vers une unité (911) de mise en correspondance située dans l'ordinateur (900) destinée à mettre en correspondance les données de configuration du réseau sur l'interface de réseau (931) correspondant à l'identification reçue du réseau logique.

3. Méthode de la revendication 1 ou 2, avec un envoi d'au moins deux jeux de données de configurations de réseaux logiques, dans laquelle chaque ensemble de données de configuration de réseau logique permet à l'interface de réseau (931) de fournir une communication entre l'ordinateur (900) et le réseau logique correspondant (900, 901, 902).

4. Méthode de l'une quelconque des revendications 1 à 3, avec un envoi d'au moins deux identifications d'interfaces de réseaux pour une seule interface de réseau (931) et une mise en correspondance des données de configuration du réseau sur l'interface de réseau (931) avec l'identification correspondante après avoir reçu l'identification du réseau logique, respectivement.

5. Méthode de l'une quelconque des revendications 1 à 4, avec une mise en fonction de l'interface de réseau (931) de telle sorte qu'elle reçoive chaque message présent dans le réseau (990) et achemine chaque message vers le système d'exploitation de l'ordinateur (900).

6. Méthode de l'une quelconque des revendications 1 à 5, avec une exécution de programme d'une unité (901) dans le réseau physique (990) qui transmet l'identification du réseau logique dans le réseau (990).

7. Méthode de l'une quelconque des revendications 1 à 6, avec une transmission de l'identification du réseau logique dans le réseau (990) dans un mode de diffusion.

8. Méthode de l'une quelconque des revendications 1 à 7, avec une transmission de l'identification du réseau logique dans le réseau (990) comme des diffusions incorrectes.

9. Ordinateur organisé pour fournir à une interface de réseau (931) des données de configuration d'un réseau logique, en particulier selon une méthode de l'une quelconque des revendications 1 à 11, comprenant :
- au moins une carte (931) d'interface de réseau, servant d'interface de l'ordinateur (900) avec au moins un réseau physique (990),
- une mémoire (921) organisée pour mémoriser au moins un jeu de données de configuration d'un réseau logique, et
- une unité (911) de mise en correspondance destinée à mettre en correspondance des données de configuration du réseau sur la carte (931) d'interface de réseau,
- dans lequel l'unité (911) de mise en correspondance est organisée pour mettre en correspondance des données de configuration d'un réseau sur la carte (931) d'interface de réseau après réception d'une identification du réseau logique correspondant, pour permettre à la carte (931) d'interface de réseau de fournir une communication entre l'ordinateur (900) et le réseau logique correspondant (900, 901, 902), et
**caractérisé en ce que** les données de configuration du réseau sont demandées à partir d'un serveur (902) situé dans le réseau physique et/ou logique (990) après avoir reçu l'identification du réseau logique en diffusant une demande à protocole DHCP vers le serveur et en recevant la réponse DHCP en provenance du serveur.

10. Programme d'ordinateur destiné à fournir à une interface de réseau (931) dans un ordinateur (900) des données de configuration d'un réseau logique, selon une méthode de l'une quelconque des revendications 1 à 11 ou à exécuter sur un ordinateur selon la revendication 9, le programme comprenant des instructions pouvant être exécutées pour provoquer des actions de l'ordinateur consistant à :
- recevoir dans l'interface de réseau (931) en provenance d'un réseau physique (990) une information d'identification d'un réseau logique, et
- mettre en correspondance des données de configuration du réseau sur l'interface de réseau (931) correspondant à l'identification reçue du réseau logique, en vue de permettre à l'interface de réseau (931) de fournir une communication entre l'ordinateur (900) et le réseau logique correspondant (900, 901, 902), et
- mémoriser les données de configuration du réseau dans l'ordinateur (900) et accéder aux données demandées de configuration du réseau lors de la mise en correspondance des données de configuration du réseau sur l'interface de réseau (931) ou
- demander des données de configuration du réseau à partir d'un serveur (902) situé dans le réseau physique et/ou logique (990) après avoir reçu l'identification du réseau logique en diffusant une demande à protocole DHCP vers le serveur et en recevant la réponse DHCP en provenance du serveur.

11. Support de mémorisation supportant un produit programme d'ordinateur qui lorsqu'il est chargé dans un ordinateur, exécute les étapes de la méthode de l'une quelconque des revendications 1 à 8.
